# DEMANDE DE BREVET EUROPEEN

(11) **EP 1 378 989 A1**
(43) Date de publication de la demande: **07.01.2004**
(21) Numéro de dépôt: 03291620.7
(22) Date de dépôt: 01.07.2003
(51) Int. Cl.: H02P 7/622

(54) **Circuit d'asservissement de moteur**

(30) Priorité: 01.07.2002 FR 0208193
(71) Demandeur: POMPES SALMSON, 78400 Chatou (FR)
(72) Inventeur: Trihan, Olivier, 53000 Laval (FR); Kernours, Michel, 35370 Mondevert (FR)
(74) Mandataire: Cabinet Hirsch

(57) **Abrégé**

L'invention concerne un circuit (1) d'asservissement comprenant
- un enroulement principal (2) d'un moteur,
- un commutateur (5),
- une unité de contrôle (4) asservissant le commutateur (5), l'unité de contrôle (4) étant connectée à l'enroulement principal (2) et le commutateur (5) isolant l'enroulement (2) et l'unité de contrôle (4) du réseau (3),
- un organe (6) d'amorçage reliant l'enroulement principal (2) et l'unité de contrôle (4) au réseau (3) lorsque l'enroulement principal (2) en est isolé.

Le circuit d'asservissement permet de démarrer le moteur et de prélever une tension dans le moteur pour alimenter l'asservissement du fonctionnement du moteur.

## Description

La présente invention concerne un circuit d'asservissement de moteur, un moteur comportant un tel circuit et une interface d'asservissement de moteur.

L'électronique mise en oeuvre pour l'asservissement des moteurs est habituellement alimentée par prélèvement d'une tension aux bornes du réseau électrique. La tension aux bornes du réseau étant élevée, une importante réduction de la tension du réseau en basse tension d'alimentation de l'électronique est réalisée. Les circuits utilisés pour transformer la tension aux bornes du réseau ont donc des composants électriques volumineux et coûteux. Les composants sont par exemple des transformateurs, et leur dispositif de commande.

Il y a donc un besoin en un circuit d'asservissement de moteur qui soit moins encombrants et moins coûteux.

Pour résoudre ce problème, l'invention propose un circuit d'asservissement comprenant un enroulement principal d'un moteur, un commutateur, une unité de contrôle asservissant le commutateur, l'unité de contrôle étant connectée à l'enroulement principal et le commutateur isolant l'enroulement et l'unité de contrôle du réseau, un organe d'amorçage reliant l'enroulement principal et l'unité de contrôle au réseau lorsque l'enroulement principal en est isolé.

Selon une variante, le circuit peut comprendre un enroulement auxiliaire du moteur, l'organe d'amorçage reliant l'enroulement principal et l'unité de contrôle à un demi-enroulement d'un enroulement auxiliaire.

Selon une variante, le circuit peut comprendre un enroulement auxiliaire du moteur, l'organe d'amorçage reliant l'enroulement principal et l'unité de contrôle à l'enroulement auxiliaire.

Selon une variante, le commutateur peut relier sélectivement l'enroulement principal et l'unité de contrôle à tout ou partie de l'enroulement auxiliaire du moteur.

Avantageusement l'unité de contrôle peut comprendre un organe de prélèvement de tension relié à l'enroulement principal, et une électronique d'asservissement du commutateur, l'électronique étant alimentée par la tension aux bornes de l'organe de prélèvement de tension. De préférence, l'organe de prélèvement de tension peut comprendre des diodes montées en série.

Selon une variante, l'unité de contrôle peut comprendre en outre un module de régulation de la tension aux bornes de l'organe de prélèvement de tension.

Avantageusement, le commutateur peut comprendre des triacs contrôlés par l'unité de contrôle et reliant l'enroulement auxiliaire et l'unité de contrôle sélectivement à tout l'enroulement auxiliaire, à un demi-enroulement de l'enroulement auxiliaire ou de mettre en parallèle les enroulements principal et auxiliaire.

Selon un mode de réalisation, l'organe d'amorçage peut être un circuit R/C.

L'invention se rapporte aussi à un moteur comportant le circuit d'asservissement tel que décrit précédemment.

De préférence, l'unité de contrôle, le commutateur et l'organe d'amorçage peuvent avoir des composants montés en surface sur une interface d'asservissement amovible.

L'invention concerne également une interface d'asservissement d'un moteur comprenant un commutateur, une unité de contrôle contrôlant le commutateur, l'unité de contrôle étant apte à prélever une tension en sortie d'un enroulement du moteur, un organe d'amorçage en parallèle du commutateur.

Avantageusement, l'unité de contrôle peut comprendre une électronique d'asservissement du commutateur et un organe de prélèvement de tension apte à prélever la tension en sortie d'un enroulement du moteur.

De préférence, l'organe d'amorçage peut être un circuit R/C.

Selon une variante, le commutateur peut comporter des triacs de sélection de la vitesse de fonctionnement du moteur.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un schéma de principe d'un circuit d'asservissement selon l'invention ;
- figure 2, un mode de réalisation du circuit d'asservissement de la figure 1 ;
- figure 3, un graphe de régulation de tension ;
- figures 4 à 7, des exemples de fonctionnement du circuit de la figure 2 ;
- figure 8, un graphe de régulation de tension dans le circuit de la figure 2 ;
- figure 9, un graphe de test du circuit de la figure 2 ;
- figure 10 un autre mode de réalisation du circuit d'asservissement de la figure 1 ;
- figures 11 à 14, des exemples de fonctionnement du circuit de la figure 10 ;
- figure 15, un graphe de régulation de tension dans le circuit de la figure 10 ;
- figure 16, un graphe de test du circuit de la figure 10.

L'invention se rapporte à un circuit d'asservissement de moteur qui est intégré au moteur. Le circuit d'asservissement permet de prélever une tension dans le moteur pour alimenter avec une basse tension l'électronique de commande du moteur. Grâce à l'invention, la tension d'alimentation n'est plus prélevée sur le secteur ce qui permet de mettre en oeuvre des composants électriques moins volumineux et moins coûteux. En particulier, la tension est prélevée dans la partie du moteur la plus intéressante pour toutes les phases de fonctionnement du moteur, c'est-à-dire à la sortie de l'enroulement principal du moteur. L'invention permet aussi d'effectuer la phase de démarrage du moteur.

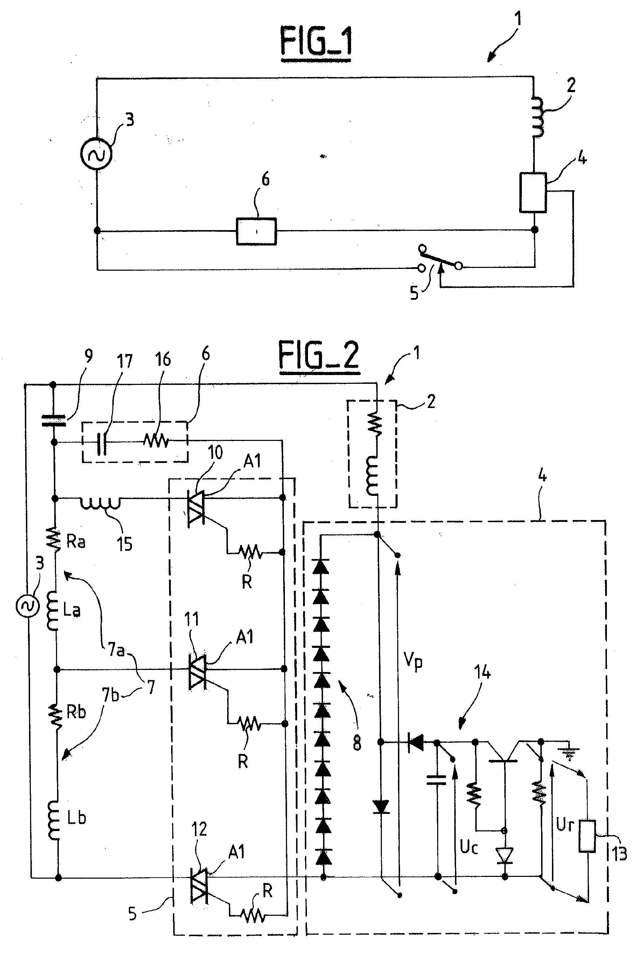

La figure 1 montre un exemple d'un schéma de principe du circuit d'asservissement. Le circuit d'asservissement 1 comprend un enroulement principal 2 de moteur relié par une de ses bornes au réseau électrique 3. Le moteur est par exemple celui de pompes telles que celles destinées à la circulation de l'eau dans les logements, en particulier pour le chauffage. Le circuit 1 comprend également un commutateur 5 et une unité de contrôle 4 asservissant le commutateur 5. L'unité de contrôle 4 est connectée à l'enroulement principal 2. Le commutateur 5 isole l'enroulement 2 et l'unité de contrôle 4 du réseau électrique 3 de sorte à interrompre le fonctionnement du moteur. Le circuit 1 comprend aussi un organe 6 d'amorçage reliant l'enroulement principal 2 et l'unité de contrôle 4 au réseau 3 lorsque l'enroulement principal 2 est isolé du réseau 3 pour l'établissement de l'alimentation basse tension du circuit d'asservissement.

Le circuit 1 d'asservissement permet d'effectuer la phase de démarrage du moteur lorsque le commutateur 5 isole l'enroulement principal 2 et que l'unité de contrôle 4 ne peut pas asservir le commutateur 5 ni en provoquer la fermeture. Pour cela, au cours de la phase de démarrage, à la mise sous tension du moteur, l'organe 6 d'amorçage permet l'établissement de l'alimentation basse tension de l'unité de contrôle 4, autorisant la commande du commutateur 5 et, de ce fait, le démarrage du moteur.

L'alimentation de l'unité de contrôle 4 étant générée par le courant traversant l'enroulement principal 2 et le courant du réseau électrique alimentant l'enroulement 2, le circuit passe en phase de fonctionnement. L'unité de contrôle 4 permet la fermeture du commutateur 5, ce qui permet à l'enroulement 2 d'être alimenté sur le réseau via le commutateur 5. L'organe 6 peut être désactivé au cours de la phase de fonctionnement car il présente une résistance supérieure à la branche de circuit sur laquelle se trouve le commutateur 5.

Le circuit selon l'invention permet donc d'effectuer les phases de démarrage et de fonctionnement du moteur sans monter des composants électriques sur les bornes du réseau. Ceci permet de mettre en oeuvre des composants qui sont moins volumineux et moins chers. En particulier, l'invention permet d'éviter l'utilisation de transformateur aux bornes du réseau ou d'une alimentation capacitive. L'invention permet aussi d'avoir un circuit d'asservissement intégré au moteur.

La figure 2 est un mode de réalisation du circuit d'asservissement. Outre l'enroulement principal 2, l'unité de contrôle 4, le commutateur 5 et l'organe 6 d'amorçage, le circuit 1 comprend également un enroulement auxiliaire 7 du moteur et un condensateur de déphasage 9. L'enroulement auxiliaire 7 comporte des premier 7a et deuxième 7b demi-enroulements. L'enroulement principal 2 et les premier 7a et deuxième 7b demi-enroulements comportent de manière classique respectivement une composante selfique La et Lb et respectivement une composante resistive Ra et Rb.

L'organe d'amorçage 6 dans l'exemple de la figure 2 relie l'enroulement principal 2 et l'unité de contrôle 4 à l'enroulement auxiliaire 7 dans son ensemble. A titre d'exemple, l'organe 6 d'amorçage est un circuit R/C. La résistance 16 permet de protéger le circuit d'asservissement 1 contre les pics de courant d'appel lors de la mise sous tension du moteur et le condensateur 17 permet de limiter le courant en régime établi. Selon la figure 2, la tension aux bornes du condensateur 17 de l'organe 6 est de 350 V ; le condensateur 17 est alors dimensionné au standard 440V.

Le commutateur 5 dans l'exemple de la figure 2 permet de fermer le circuit 1 et de relier sélectivement l'enroulement principal 2 avec tout ou partie de l'enroulement auxiliaire 7. Le commutateur 5 peut aussi mettre en parallèle l'enroulement principal 2 avec l'enroulement auxiliaire 7 et le condensateur de déphasage 9. Le commutateur permet donc de faire fonctionner le moteur à des régimes de vitesse différents. La sélection d'un régime de fonctionnement est asservie par l'unité de contrôle 4. Le commutateur 5 comprend par exemple des triacs 10, 11, 12. Avantageusement, le commutateur 5 comprend une résistance R associée à chaque triac ; les résistances permettent d'assurer un blocage du triac lorsque celui-ci n'est pas commandé. L'activation du triac 10 permet de mettre en série l'enroulement principal 2 avec tout l'enroulement auxiliaire 7, l'activation du triac 11 permet de mettre en série l'enroulement principal 2 avec le demi-enroulement 7b de l'enroulement auxiliaire 7, l'activation du triac 12 permet de mettre en parallèle l'enroulement principal 2 avec le condensateur de déphasage 9 et les deux demi-enroulements 7a, 7b de l'enroulement auxiliaire 7. Le commutateur 5 permet une commande simplifiée des 3 triacs permettant la sélection de 3 vitesses sans isolation galvanique entre les triacs.

Au repos, le commutateur 5 est un interrupteur, isolant l'enroulement principal 2 et l'unité de contrôle 4 du réseau électrique.

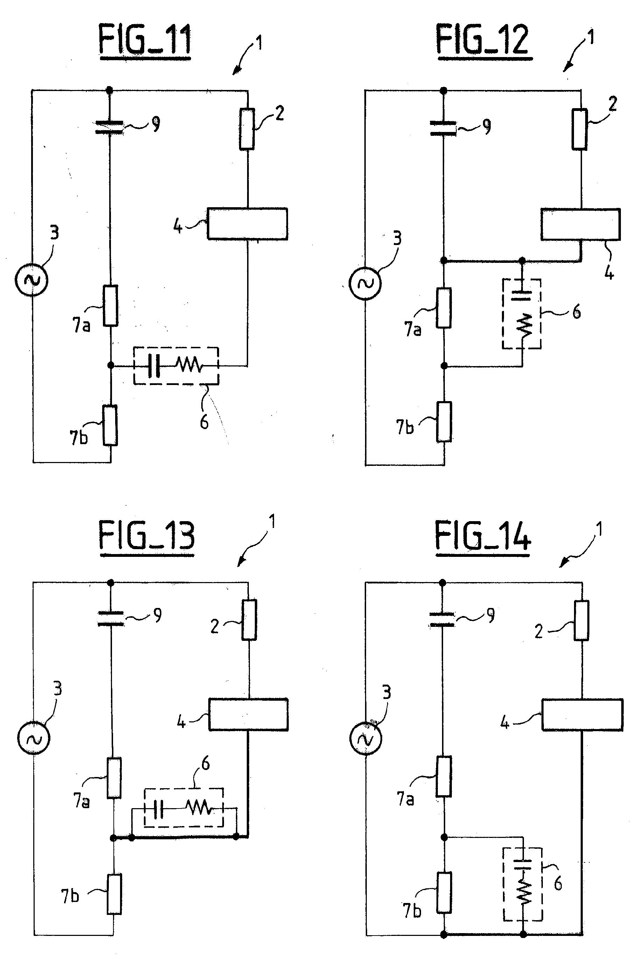

L'unité de contrôle 4 dans l'exemple de la figure 2 comprend un organe 8 de prélèvement de tension relié à l'enroulement principal 2. L'organe 8 permet d'obtenir une basse tension Vp à ses bornes. L'organe 8 est par exemple un ensemble de diodes montées en série. Les diodes permettent de générer une tension à leurs bornes dans le sens passant, à partir du courant traversant l'enroulement 2. Les diodes permettent aussi de créer une chute de tension pour une large plage de tension de la tension d'alimentation du réseau électrique ; la tension aux bornes du réseau peut être entre 110 et 255 Vac pour une fréquence de 50/60 Hz. Par exemple une diode de redressement de type 1N4004 permet d'obtenir à ses bornes une tension d'environ 0,7 V. La tension aux bornes de l'organe 8 dépend du nombre de diodes en série ; selon la figure 2, 11 diodes sont montées en série ce qui permet d'obtenir une tension alternative aux bornes de l'organe 8 d'environ 7,7V. En pratique, en raison de la variation de la chute de tension d'une diode dans le sens passant due à la dispersion du produit de série (lots de fabrication) et à la température de fonctionnement, la tension aux bornes de l'organe 8 est de 8 à 9 V.

Avantageusement, l'unité de contrôle 4 comprend en outre un module 14 de régulation de la tension alternative Vp aux bornes de l'organe 8 de prélèvement de tension. Dans l'exemple de la figure 2, la tension primaire Vp aux bornes de l'organe 8 de prélèvement de tension est filtrée en une tension continue Uc d'environ 7 à 8 V ; la tension filtrée Uc est ensuite régulée en une tension continue Ur d'environ +5 V qui est la tension d'alimentation de l'électronique d'asservissement 13.

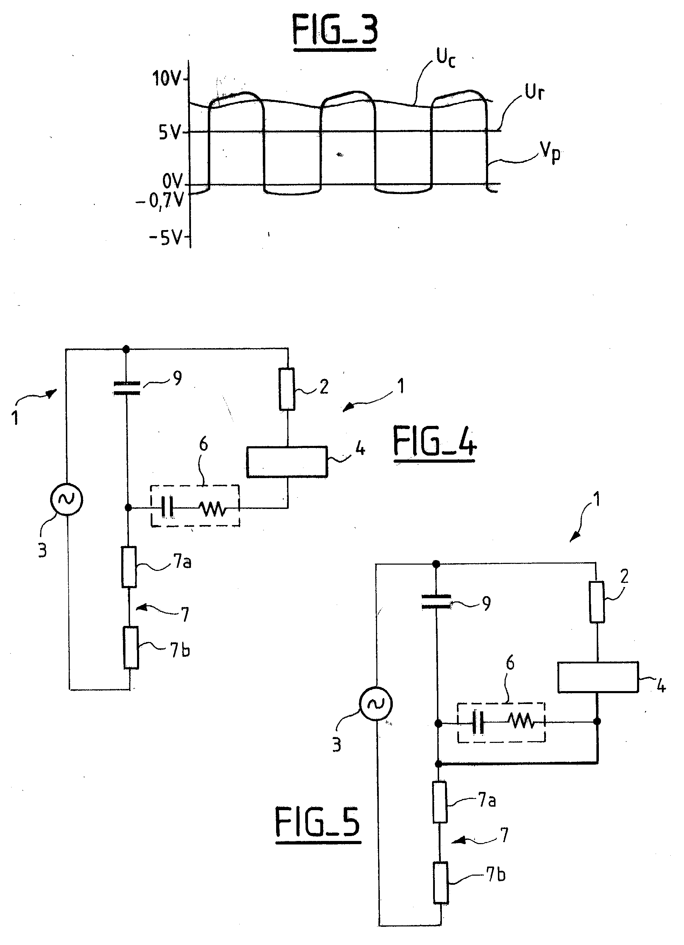

La figure 3 montre un graphe de régulation de tension. La figure 3 montre la tension alternative Vp aux bornes de l'organe 8 (qui est de 8-9 V en raison de la dispersion de lot de série, cf. ci-dessus figure 2), la tension continue filtrée Uc et la tension continue régulée Ur. L'utilisation de diodes dans l'organe 8 de prélèvement de tension permet de créer une tension primaire Vp mono alternance supérieure à la tension continue d'alimentation de l'électronique d'asservissement 13 de manière à référencer les triacs 10, 11, 12 au même potentiel que l'unité de contrôle 4. Ceci permet d'avoir un point de référence flottant de l'alimentation basse tension (+5 V) commun avec l'unité de contrôle 4 et les 3 triacs 10-11-12, et ce de façon économique (cf. les explications ci-dessous en référence avec la figure 2).

L'unité de contrôle 4 comprend en outre une électronique d'asservissement 13 du commutateur 5. L'électronique 13 d'asservissement permet d'asservir électroniquement le fonctionnement du moteur d'une part pour réduire la consommation d'énergie dans le respect des règles de protection de l'environnement et d'autre part pour améliorer le confort acoustique des installations. L'électronique 13 est alimentée en basse tension par la tension aux bornes de l'organe 8. L'avantage est d'utiliser le courant d'un enroulement du moteur, en l'occurrence l'enroulement 2 pour créer une tension d'alimentation l'unité de contrôle 4, à travers l'ensemble des diodes ; ceci permet d'utiliser des composants peu encombrants et peu onéreux pour produire la basse tension d'alimentation de l'électronique 13. L'électronique 13 est par exemple un microprocesseur.

Le fonctionnement du circuit 1 d'asservissement est expliqué dans le cas du montage de la figure 2. Les figures 4 à 7 montrent respectivement les phases de démarrage, et de fonctionnement en vitesse minimale, intermédiaire et maximale.

Dans l'état initial du circuit 1, les triacs du commutateur 5 sont au repos et l'enroulement principal 2 n'est pas connecté d'un côté aux bornes du réseau électrique 3.

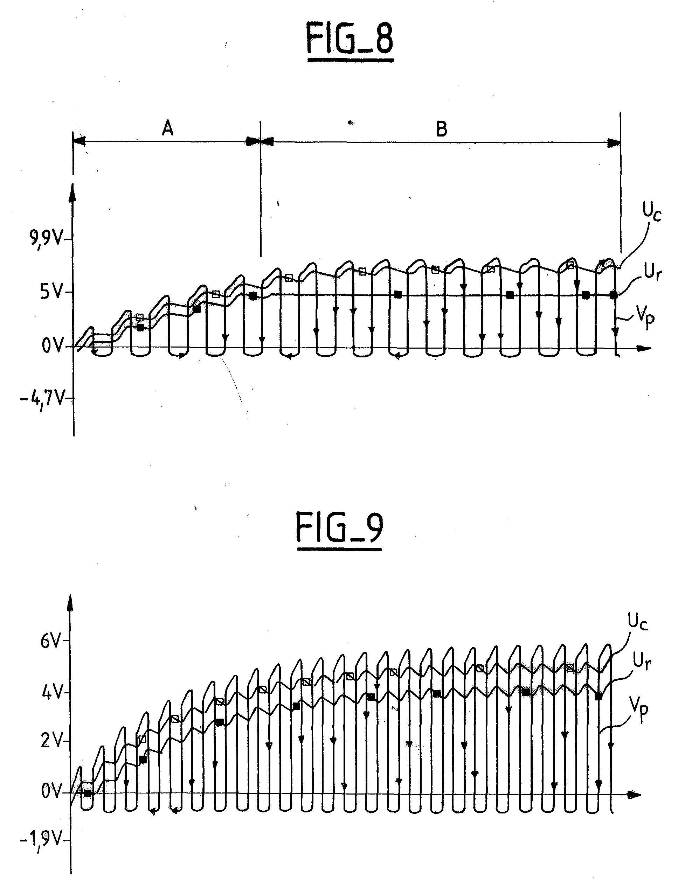

Au cours de la phase de démarrage représenté sur la figure 4, le moteur est mis sous tension. L'organe 6 permet de reboucler l'enroulement principal 2 sur le réseau électrique 3 via les deux demi-enroulements 7a et 7b de l'enroulement auxiliaire 7. Cette phase est représentée sur le graphe de régulation de tension de la figure 8 dans la plage A. Durant cette période transitoire, le circuit 1 établit la basse tension Ur de +5V.

Lorsque la basse tension est régulée, telle que représentée sur la plage B de la figure 8, le circuit passe en phase de fonctionnement. Au cours de cette phase, l'électronique d'asservissement 13 devient opérationnelle. Elle prend le relais en activant sélectivement les triacs. Quel que soit le triac activé, la basse tension Ur créée n'est pas sensible aux variations de courant dans l'enroulement principal 2, ce qui lui permet de rester stable. Ceci est dû aux diodes dans le sens passant ; la chute de tension à leurs bornes est peu sensible au courant les traversant dans la limite d'utilisation spécifiée par le fabricant. L'activation d'un triac rend inactif l'organe 6 d'amorçage ce qui permet au commutateur 5 de sélectionner différents régimes de fonctionnement du moteur.

La figure 5 montre le fonctionnement du moteur lorsque l'électronique d'asservissement 13 est dans une position correspondant à une vitesse minimale du moteur. Le triac 10 de la figure 2 est activé et est représenté par la branche de circuit en gras. Le triac 10 permet de brancher l'enroulement principal 2 entre le condensateur de déphasage 9 et l'enroulement auxiliaire 7. La bobine 15 (figure 2) protège le triac 10 des décharges de courant du condensateur 9 de déphasage du moteur.

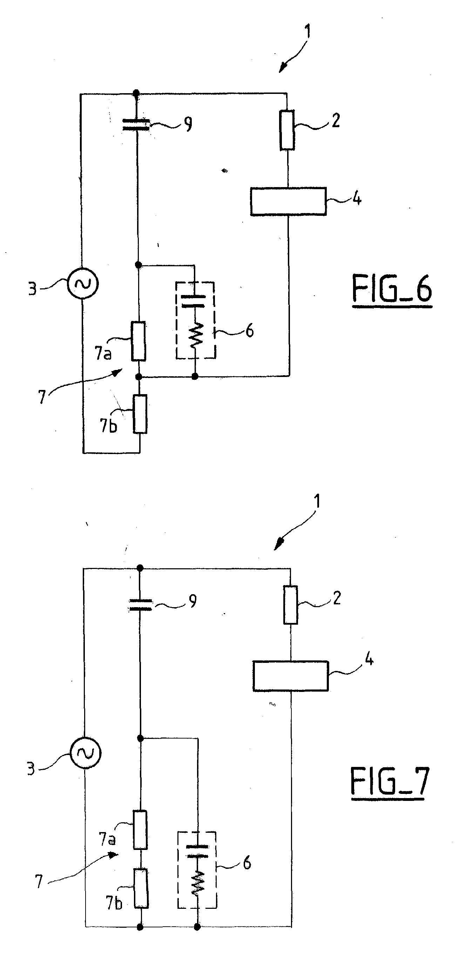

La figure 6 montre le fonctionnement du moteur lorsque l'électronique d'asservissement 13 est dans une position correspondant à une vitesse intermédiaire du moteur. Le triac 11 de la figure 2 est activé et est représenté par la branche de circuit en gras. Le triac 11 permet de brancher l'enroulement principal 2 entre les deux demi-enroulements 7a et 7b de l'enroulement auxiliaire 7.

La figure 7 montre le fonctionnement du moteur lorsque l'électronique d'asservissement 13 est dans une position correspondant à une vitesse rapide du moteur. Le triac 12 de la figure 2 est activé et est représenté par la branche de circuit en gras. Le triac 12 permet de brancher l'enroulement principal 2 en parallèle avec l'ensemble de l'enroulement auxiliaire 7.

En référence à la figure 2, l'invention permet de référencer les triacs 10, 11, 12 au même potentiel que l'unité 4 de contrôle. Dans l'exemple d'application, le +5V de l'alimentation continue de l'électronique d'asservissement 13 est connectée aux triacs 10, 11, 12 du côté anode A1. Le +5V de l'alimentation continue est le point de référence pour la commande des triacs. Le potentiel de ce point par rapport au réseau est différent et dépendant du triac activé, c'est-à-dire que ce point est flottant et non fixe :
- lorsque le triac 12 est activé, le + 5V de l'alimentation continue est relié au potentiel de la phase ou du neutre du réseau électrique (cf. figure 7) ;
- lorsque le triac 11 est activé, le +5V de l'alimentation continue est relié au potentiel correspondant au milieu de la phase auxiliaire du moteur 7a, 7b (cf. figure 6) ;
- lorsque le triac 10 est activé, le +5V de l'alimentation continue est relié au potentiel correspondant à la liaison entre le condensateur 9 de déphasage du moteur et la phase auxiliaire du moteur, du côté du demi-enroulement 7a (cf. figure 5).

En phase de démarrage, aucun triac n'est activé ; le +5V de l'alimentation continue est relié au circuit d'amorçage 6 (résistance 16 et condensateur 17), correspondant à un potentiel issu de la tension de la capacité 9 de déphasage (cf. figure 4).

L'invention permet de se soustraire de l'utilisation:
- soit d'un transformateur en tête du circuit d'alimentation, afin d'avoir le +5V isolé du réseau électrique et de pouvoir raccorder le +5V aux triacs 10, 11, 12 ;
- soit d'optocoupleurs assurant une commande isolée des triacs, le +5V de l'alimentation étant référencé à un potentiel du réseau électrique (alimentation capacitive). Dans ce cas d'autres composants périphériques aux optocoupleurs sont également nécessaire pour assurer la commande des triacs.

La figure 9 montre des conditions de test de friction du montage de la figure 2. Le test a pour but de vérifier que le moteur peut démarrer avec le circuit d'asservissement 1, alors que le moteur est sous-alimenté par une faible tension, par exemple de 110V avec un très faible couple moteur. La tension régulée Ur est suffisante dans ce cas extrême pour un fonctionnement correct de l'électronique 13 d'asservissement de l'unité de contrôle 4, permettant ainsi de pouvoir réaliser le test de friction. Une alimentation très basse tension constituée à partir d'un transformateur ou une alimentation très basse tension capacitive n'a pas cet avantage, à moins de surdimensionner les caractéristiques du transformateur ou la valeur du condensateur dans le cas d'une alimentation capacitive.

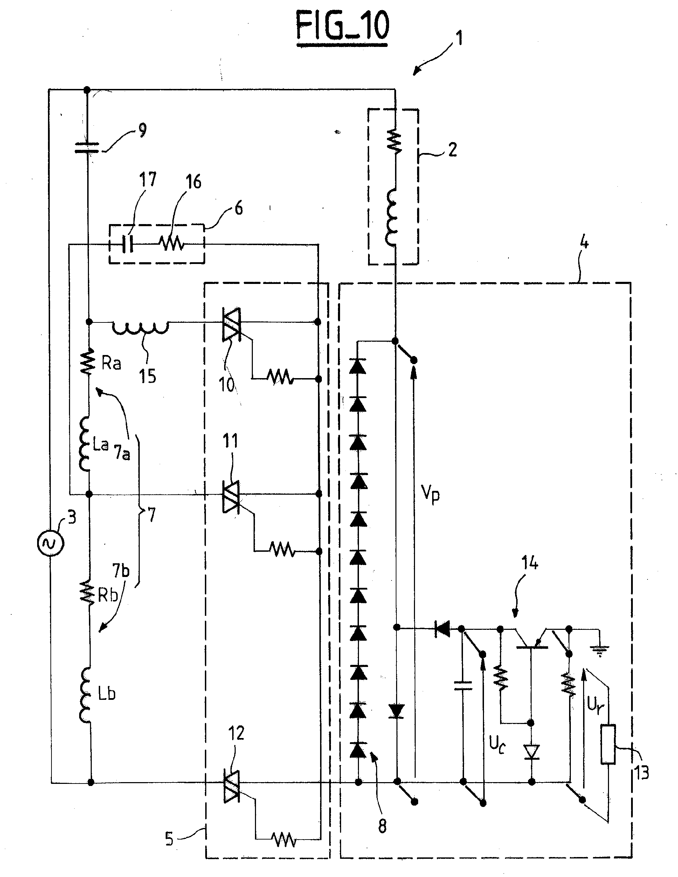

La figure 10 montre un autre mode de réalisation du circuit d'asservissement. Ce mode de réalisation diffère de celui de la figure 2 en ce que l'organe 6 d'amorçage est branché entre les deux demi-enroulements 7a, 7b permettant au moteur de démarrer dans sa vitesse intermédiaire. L'avantage du montage de la figure 10 est de réduire la tension aux bornes du condensateur 17 de l'organe 6 d'amorçage et de choisir en conséquence un composant pour l'organe 6 moins cher et de plus petite dimension. Ainsi, le mode de réalisation de la figure 10 permet de réduire à 250 V la tension aux bornes du condensateur 17 de l'organe 6 d'amorçage et donc de choisir un composant au standard 300V moins cher et de plus petite dimension. Les avantages décrits dans le cadre du mode de réalisation de la figure 2 sont repris.

Le fonctionnement du circuit 1 d'asservissement selon la figure 10 est expliqué en relation avec les figures 11 à 14. Les figures 11 à 14 montrent respectivement les phases de démarrage, et de fonctionnement en vitesse minimale, intermédiaire et rapide.

Dans l'état initial du circuit 1, les triacs sont au repos et l'enroulement principal 2 n'est pas connecté d'un côté à la tension du réseau électrique 3.

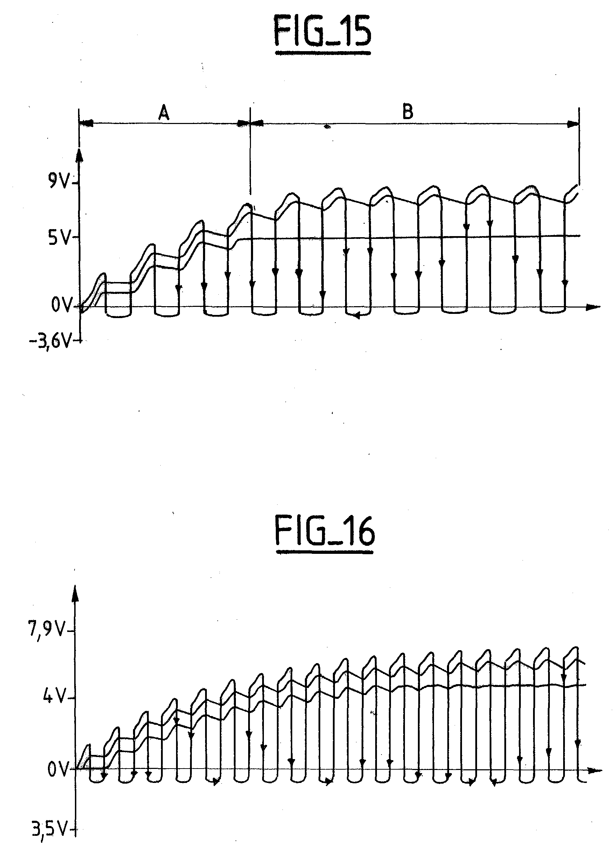

Au cours de la phase de démarrage représenté sur la figure 11, le moteur est mis sous tension. L'organe 6 permet de reboucler l'enroulement principal 2 sur le réseau électrique 3 via les deux demi-enroulements 7a et 7b de l'enroulement auxiliaire 7. Cette phase est représentée sur le graphe de régulation de tension de la figure 15 dans la plage A. Durant cette période transitoire, le circuit 1 établit la basse tension Ur.

Lorsque la basse tension est régulée, telle que représentée sur la plage B de la figure 15, le circuit passe en phase de fonctionnement. Au cours de cette phase, l'électronique d'asservissement 13 devient opérationnelle. Les avantages décrits précédemment dans le cadre du circuit de la figure 2 sont repris.

La figure 12 montre le fonctionnement du moteur en régime de vitesse minimale. Le triac 10 de la figure 10 est activé et est représenté par la branche de circuit en gras. Le triac 10 permet de brancher l'enroulement principal 2 entre le condensateur de déphasage 9 et l'enroulement auxiliaire 7.

La figure 13 montre le fonctionnement du moteur en régime de vitesse intermédiaire. Le triac 11 de la figure 10 est activé et est représenté par la branche de circuit en gras. Le triac 11 permet de brancher l'enroulement principal 2 entre les deux demi-enroulements 7a et 7b.

La figure 14 montre le fonctionnement du moteur en régime de vitesse rapide. Le triac 12 de la figure 10 est activé et est représenté par la branche de circuit en gras. Le triac 12 permet de brancher l'enroulement principal 2 en parallèle avec l'ensemble de l'enroulement auxiliaire 7.

La figure 16 montre des conditions de test du montage de la figure 10. Le test a pour but de vérifier que le moteur peut démarrer avec le circuit d'asservissement 1, alors que le moteur est sous-alimenté par une faible tension, par exemple de 110V avec un très faible couple moteur. Les avantages sont les mêmes que ceux de la figure 9.

Dans une autre variante de réalisation non représentée du circuit de la figure 1, l'organe 6 d'amorçage peut être branché aux bornes du triac Y1.

L'invention se rapporte aussi à un moteur comportant le circuit de démarrage 1. Le moteur est par exemple celui d'une pompe de démarrage. L'invention présente l'avantage que le circuit d'asservissement est intégré au moteur. L'invention présente aussi l'avantage que la source de courant de l'asservissement du moteur se trouve dans le moteur, ce qui permet d'asservir le fonctionnement du moteur par des composants moins encombrants. L'organe 6 permet le démarrage du moteur, alors que l'unité de contrôle 4 ne peut pas commuter le commutateur 5 car aucun courant ne circule dans le moteur.

Les composants du circuit 1 d'asservissement étant peu encombrants, l'unité de contrôle 4, le commutateur 5 et l'organe d'amorçage 6 peuvent de préférence avoir des composants montés en surface (composants CMS). De tels composants sont moins chers et sont simples à monter. Avantageusement, les composants CMS sont montés sur une interface d'asservissement amovible. L'interface peut être retirée du moteur et remplacée par une autre interface de sorte à permettre un asservissement différent du moteur. L'interface amovible peut être adaptée sur plusieurs moteurs de puissance différente.

L'invention se rapporte aussi à l'interface d'asservissement du moteur. L'interface d'asservissement le commutateur 5 et l'unité de contrôle 4, contrôlant le commutateur 5. Lorsque l'interface d'asservissement est connectée sur le moteur, l'unité de contrôle 4 est apte à prélever une tension en sortie d'un enroulement du moteur. L'interface comprend aussi l'organe 6 d'amorçage, en parallèle du commutateur 5. De préférence, l'interface est connectée en sortie de l'enroulement principal du moteur.

Les composants formant l'unité de contrôle 4 (électronique d'asservissement 13, organe 8 de prélèvement de tension), l'organe 6 d'amorçage (circuit R/C) et le commutateur 5 (triacs de sélection de la vitesse de fonctionnement du moteur) sont ceux décrits précédemment en liaison avec les figures 2 et 10. Le fonctionnement et les avantages sont également repris.

## Revendications

1. Un circuit (1) d'asservissement comprenant :
- un enroulement principal (2) d'un moteur,
- un commutateur (5),
- une unité de contrôle (4) asservissant le commutateur (5), l'unité de contrôle (4) étant connectée à l'enroulement principal (2) et le commutateur (5) isolant l'enroulement (2) et l'unité de contrôle (4) du réseau,
- un organe (6) d'amorçage reliant l'enroulement principal (2) et l'unité de contrôle (4) au réseau lorsque l'enroulement principal (2) en est isolé.

2. Le circuit selon la revendication 1, **caractérisé en ce que** le circuit comprend un enroulement auxiliaire (7) du moteur, l'organe (6) d'amorçage reliant l'enroulement principal (2) et l'unité de contrôle (4) à un demi-enroulement (7a) d'un enroulement auxiliaire (7).

3. Le circuit selon la revendication 1, **caractérisé en ce que** le circuit comprend un enroulement auxiliaire (7) du moteur, l'organe (6) d'amorçage reliant l'enroulement principal (2) et l'unité de contrôle (4) à l'enroulement auxiliaire (7).

4. Le circuit selon l'une des revendications précédentes, **caractérisé en ce que** le commutateur (5) relie sélectivement l'enroulement principal (2) et l'unité de contrôle (4) à tout ou partie de l'enroulement auxiliaire (7) du moteur.

5. Le circuit selon l'une des revendications 1 à 4, **caractérisé en ce que** l'unité de contrôle (4) comprend :
- un organe (8) de prélèvement de tension relié à l'enroulement principal (2), et
- une électronique d'asservissement (13) du commutateur (5), l'électronique (13) étant alimentée par la tension aux bornes de l'organe (8) de prélèvement de tension.

6. Le circuit selon la revendication 5, **caractérisé en ce que** l'organe (8) de prélèvement de tension comprend des diodes montées en série.

7. Le circuit selon la revendication 5 ou 6, **caractérisé en ce que** l'unité de contrôle (4) comprend en outre un module de régulation (14) de la tension aux bornes de l'organe (8) de prélèvement de tension.

8. Le circuit selon la revendication 5 ou 6, **caractérisé en ce que** le commutateur (5) comprend des triacs contrôlés par l'unité de contrôle (4) et reliant l'enroulement auxiliaire (2) et l'unité de contrôle (4) sélectivement à tout l'enroulement auxiliaire (7), à un demi-enroulement (7a) de l'enroulement auxiliaire (7) ou de mettre en parallèle les enroulements principal (2) et auxiliaire (7).

9. Le circuit selon l'une des revendications 1 à 8, **caractérisé en ce que** l'organe (6) d'amorçage est un circuit R/C.

10. Un moteur comportant le circuit d'asservissement selon l'une des revendications précédentes.

11. Le moteur selon la revendication 10, **caractérisé en ce que** l'unité de contrôle (4), le commutateur (5) et l'organe d'amorçage (6) ont des composants montés en surface sur une interface d'asservissement amovible.

12. Une interface d'asservissement d'un moteur comprenant :
- un commutateur (5),
- une unité de contrôle (4) contrôlant le commutateur (5), l'unité de contrôle (4) étant apte à prélever une tension en sortie d'un enroulement du moteur,
- un organe (6) d'amorçage en parallèle du commutateur (5).

13. L'interface selon la revendication 12, **caractérisé en ce que** l'unité de contrôle (4) comprend une électronique d'asservissement (13) du commutateur (5) et un organe (8) de prélèvement de tension apte à prélever la tension en sortie d'un enroulement du moteur.

14. L'interface selon la revendication 12 ou 13, **caractérisé en ce que** l'organe (6) d'amorçage est un circuit R/C.

15. L'interface selon l'une des revendications 12 à 14, **caractérisé en ce que** le commutateur (5) comporte des triacs de sélection de la vitesse de fonctionnement du moteur.
